# EUROPÄISCHE PATENTSCHRIFT

(11) **EP 1 672 263 B1**
(45) Veröffentlichungstag und Bekanntmachung des Hinweises auf die Patenterteilung: **24.09.2008**
(21) Anmeldenummer: 05026780.6
(22) Anmeldetag: 08.12.2005
(51) Int. Cl.: F16K 31/60, F16K 27/04

(54) **Sanitärarmatur mit einem Wasserdurchflussbegrenzer**
Sanitary fitting with a flow limiter
Robinetterie sanitaire avec un limiteur de débit

(30) Priorität: 15.12.2004 DE 102004060860
(43) Veröffentlichungstag der Anmeldung: 21.06.2006
(73) Patentinhaber: HANSA METALLWERKE AG, 70567 Stuttgart (DE)
(72) Erfinder: Schmid, Lars, 72622 Nürtingen (DE); Harsch, Martin, 74395 Mundelsheim (DE)
(74) Vertreter: Ostertag, Ulrich

(56) Entgegenhaltungen:
- EP-A- 0 643 246
- EP-A- 0 699 856
- EP-A- 0 771 982
- FR-A- 2 665 500
- US-A- 4 960 154

## Beschreibung

Die Erfindung betrifft eine Sanitärarmatur, insbesondere eine Einhebelmischbatterie, mit einem Bedienungselement, mit dem ein Wasserdurchfluss einstellbar ist, und einem Wasserdurchflussbegrenzer, welcher den Wasserdurchfluss auf einen unter dem Maximalwert liegenden Wert begrenzt.

Bei bekannten Sanitärarmaturen dieser Art werden Wasserdurchflussbegrenzer durch eine Rasteinrichtung realisiert, welche fest in der Steuerkartusche angeordnet und permanent aktiviert ist. Sie ist von außen weder sichtbar noch zugänglich. Der Benutzer erhalt hier also weder eine Information über die Funktion des Wasserdurchflussbegrenzers, noch kann er diese beeinflussen. EP 0 643 246 A1 offenbart eine Sanitärarmatur gemäß dem Oberbegriff des Anspruchs 1.

Aufgabe der vorliegenden Erfindung ist es, eine Sanitärarmatur der eingangs genannten Art so auszugestalten, dass die Funktion des Wasserdurchflussbegrenzers für den Benutzer erkennbar und beeinflussbar ist.

Diese Aufgabe wird erfindungsgemäß durch die Merkmale des Anspruchs 1 gelöst.

Erfindungsgemäß kann also der Wasserdurchflussbegrenzer in montiertem Zustand vom Benutzer zu- und/oder abgeschaltet werden.

Um den Bedienkomfort deutlich zu vergrößern, sieht eine vorteilhafte Ausführungsform vor, dass das Betätigungselement im oder am Bedienungselement von außen zugänglich angeordnet ist. Der Vorteil hierbei ist, dass der Wasserdurchflussbegrenzer zu- beziehungsweise abgeschaltet werden kann, ohne dass beispielsweise das Bedienungselement entfernt oder das Gehäuse der Sanitärarmatur geöffnet werden muss.

Ein erster Teil des Wasserdurchflussbegrenzers, der das Betätigungselement aufweisende Teil, ist im oder am Bedienungselement, und ein zweiter Teil des Wasserdurchflussbegrenzers an einer einen Aufnahmeraum für eine Steuerkartusche abdeckenden Kugelhaube, angeordnet. Auf diese Weise ist das Betätigungselement leicht zugänglich. Darüber hinaus assoziiert der Benutzer ohnehin mit dem Bedienungselement eine Vorrichtung zum Verändern der Einstellungen der Sanitärarmatur.

Besonders platzsparend ist es, wenn das Betätigungselement des wasserdurchflussbegrenzers um eine virtuelle Drehachse drehbar ist, um den Wasserdurchflussbegrenzer zu aktivieren beziehungsweise zu deaktivieren.

Alternativ kann das Betätigungselement ein Druckbetätigungselement und linear verschiebbar sein, um den Wasserdurchflussbegrenzer zu aktivieren beziehungsweise zu deaktivieren. Ein von außen zugängliches Druckbetätigungselement ist insbesondere für motorisch beeinträchtigte Benutzer von Vorteil.

Für den Benutzer besonders deutlich erfassbar ist das Einsetzen der Wasserdurchflussbegrenzung, wenn der Wasserdurchflussbegrenzer eine insbesondere zweistufige Rasteinrichtung aufweist.

Bei einer technisch einfachen, besonders vorteilhaften Ausführungsform weist die Rasteinrichtung e einen Raststeg und ein Rastelement mit einer mit dem Raststeg zusammenwirkenden Rastnut auf. Sowohl beim Einfahren des Raststegs auf der einen Seite als auch beim Ausfahren des Raststegs auf der anderen Seite der Rastnut muss ein mechanischer Widerstand überwunden werden, so dass eine zweistufige Rasteinrichtung entsteht.

Wird ein drehbares Betätigungselement eingesetzt, ist es zweckmäßig, wenn das Rastelement im Wesentlichen seitlich von seiner virtuellen Drehachse einen Vorsprung aufweist, an dem die Rastnut ausgebildet ist. Durch Drehen um die Drehachse des Rastelements wird der Vorsprung in Richtung des Raststegs beziehungsweise von dieser weg bewegt und somit der Wasserdurchflussbegrenzer aktiviert beziehungsweise deaktiviert.

Alternativ kann das Rastelement ein vorgespanntes Winkelelement mit wenigstens einem Knick umfassen und die Rastnut kann im Bereich des Knicks angeordnet sein. Durch Verändern des Winkels des Winkelelements, insbesondere durch Schwenken seiner Schenkel relativ zueinander, kann besonders einfach der die Rastnut umfassende Knick in Richtung des Raststegs verschoben werden, um den Wasserdurchflussbegrenzer zu aktivieren, beziehungsweise von dieser weg geschoben werden, um ihn zu deaktivieren.

Um auch bei aktiviertem Wasserdurchflussbegrenzer einen großen Wasserdurchfluss einstellen zu können, ist vorteilhafterweise wenigstens ein ein Rastelement aufweisender Teil des Wasserdurchflussbegrenzers elastisch, so dass ein durch diesen beim Schwenken des Bedienungselement hervorrufender mechanischer Widerstand überwunden werden kann.

Um dem Benutzer über das Einsetzen der Begrenzung des Wasserdurchflusses zu informieren, kann der Wasserdurchflussbegrenzer einen optischen und/oder akustischen Signalgeber aufweisen, mit dem beim Überwinden eines durch ihn hervorgerufenen mechanischen Widerstand ein entsprechendes Signal ausgegeben wird.

Zweckmäßig ist darüber hinaus, wenn der Wasserdurchflussbegrenzer eine Funktionsanzeigevorrichtung aufweist, mit der der Benutzer beispielsweise über den eingestellten Wasserdurchfluss informiert wird. Hierzu kann beispielsweise eine Leuchtdiode vorgesehen sein, die leuchtet, sobald der durch den Wasserdurchflussbegrenzer hervorgerufene mechanische Widerstand überwunden ist, und die damit signalisiert, dass ein großer Wasserdurchfluss herrscht. Alternativ kann ein Stift mit einem farbigen Ring beispielsweise am Bedienungselement sichtbar werden. Es kann aber auch ein Schauglas mit einer Luftblase in einer Flüssigkeit vorgesehen sein, die je nach Stellung des Bedienungselementes einem Feld "Sparen" oder "Viel Wasser" im Schauglas zugeordnet ist. Statt der Luftblase kann auch eine Kugel mit einem exzentrischen Schwerpunkt in dem Schauglas angeordnet sein, welche beispielsweise mit den Ziffern 1 und 2 bedruckt ist und die je nach Stellung des Bedienungselementes eine der beiden Ziffern in Schauglas anzeigt.

Ausführungsbeispiele der Erfindung werden nachfolgend anhand der Zeichnung näher erläutert; es zeigen
- Figur 1: schematisch einen axialen Schnitt durch ein erstes Ausführungsbeispiel einer Einhebelmischbatterie, bei der ein Wasserdurchflussbegrenzer ein Drehbetätigungselement und ein offenes Rastelement aufweist;
- Figur 2: schematisch eine Detailansicht der in Figur 1 dargestellten Einhebelmischbatterie im Bereich des Wasserdurchflussbegrenzers, der hier aktiviert ist;
- Figur 3: schematisch eine Detailansicht der in Figur 1 dargestellten Einhebelmischbatterie im Bereich des Wasserdurchflussbegrenzers, der hier deaktiviert ist;
- Figur 4: schematisch den in Figur 3 dargestellten Wasserdurchflussbegrenzer im Schnitt;
- Figur 5: schematisch die Vorderansicht des in Figur 3 dargestellten Wasserdurchflussbegrenzers;
- Figur 6: schematisch einen axialen Schnitt durch ein zweites Ausführungsbeispiel einer Einhebelmischbatterie, bei der ein Wasserdurchflussbegrenzer ein Drehbetätigungselement und ein geschlossenes Rastelement aufweist;
- Figur 7: schematisch eine Detailansicht der in Figur 7 dargestellten Einhebelmischbatterie im Bereich des Wasserdurchflussbegrenzers, der hier aktiviert ist;
- Figur 8: schematisch einen axialen Schnitt durch ein drittes Ausführungsbeispiel einer Einhebel- mischbatterie mit einem Wasserdurchflussbegrenzer, der ein einmalig betätigbares Druckbetätigungselement und ein verschiebbares Rastelement aufweist;
- Figur 9: schematisch eine Detailansicht der in Figur 8 dargestellten Einhebelmischbatterie im Bereich des Wasserdurchflussbegrenzezs, der hier deaktiviert ist;
- Figur 10: schematisch eine Detailansicht der in Figur 8 dargestellten Einhebelmischbatterie im Bereich des Wasserdurchflussbegrenzers, der hier aktiviert ist;
- Figur 11: schematisch einen axialen Schnitt durch ein viertes Ausführungsbeispiel einer Einhebelmischbatterie mit einem Wasserdurchflussbegrenzer, der ein Druckbetätigungselement aufweist.

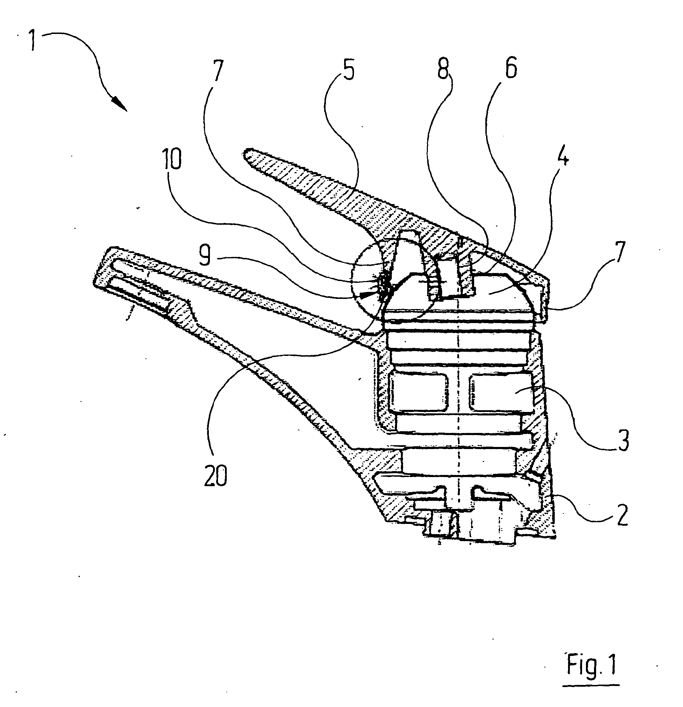

In Figur 1 ist ein erstes Ausführungsbeispiel einer insgesamt mit dem Bezugszeichen 1 versehenen Einhebelmischbatterie mit einem Mischhebel 5 dargestellt.

In einem Gehäuse 2 der Einhebelmischbatterie 1 ist eine Steuerkartusche 3 angeordnet, deren Funktion an sich bekannt ist.

Der Aufnahmeraum der Steuerkartusche 3 im Gehäuse 2 ist in Figur 1 oben mit einer halbkugelförmigen Kugelhaube 4 abgeschlossen. In der Oberseite der Kugelhaube 4 ist eine Kugelhaubenöffnung 6 angeordnet.

Der Mischhebel 5 weist im Bereich der Kugelhaube 4 an seiner in Figur 1 unteren Seite einen Kappenabschnitt 7 auf, der sich einstückig an diesen anschließt. Der Kappenabschnitt 7 hat in etwa die Form eines Hohlzylinders, dessen Durchmesser etwas größer ist als der Durchmesser der Kugelhaube 4.

Darüber hinaus schließt sich im Zentrum des Kappenabschnittes 7 eine Stellschaftaufnahme 8 einstückig an die Unterseite des Mischhebels 5 an. Sie führt von oben durch die Kugelhaubenöffnung 6 und nimmt von unten her einen nicht dargestellten Stellschaft der Steuerkartusche 3 auf. Die Stellschaftaufnahme 8 ist im Inneren der Steuerkartusche 3 in bekannter Weise in einem Drehteil horizontal verschwenkbar gelagert, das seinerseits um die Achse der Steuerkartusche 3 verdrehbar ist.

Durch Schwenken beziehungsweise Drehen des Mischhebels 5 wird der Wasserfluss beziehungsweise die Wassertemperatur verändert.

Die Ausmaße und Positionen der Kugelhaube 4, des Kappenabschnitts 7, der Stellschaftaufnahme 8 und die Position der horizontalen Schwenkachse des Stellschafts sind so aneinander angepasst, dass beim Schwenken des Mischhebels 5 die in Figur 1 untere ringförmige Stirnseite des Kappenabschnitts 7 in einem kleinen Abstand entlang der Oberfläche der Kugelhaube 4 geführt wird. So wird in jeder Position des Mischhebels 5 die Kugelhaubenöffnung 6 durch den Kappenabschnitt 7 verdeckt.

Im Bereich der in Figur 1 linken unteren Stirnseite des Kappenabschnitts 5 ist in dieser ein Wasserdurchflussbegrenzer 9 angeordnet.

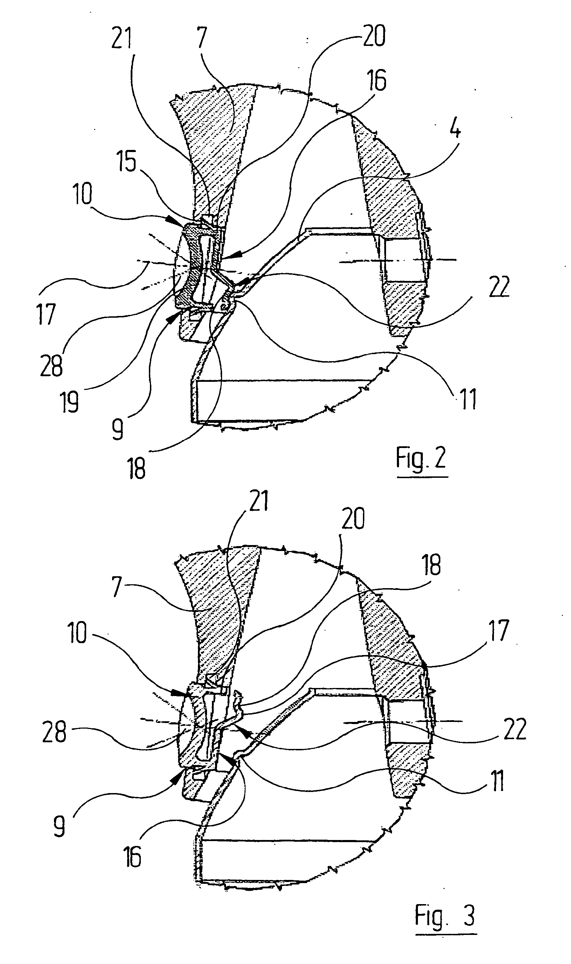

In Figur 2 ist der Wasserdurchflussbegrenzer 9 im Detail in aktiviertem Zustand und in Figur 3 in deaktiviertem Zustand dargestellt.

Der Wasserdurchflussbegrenzer 9 weist ein Drehbetätigungselement 10, welches in dem Kappenabschnitt 7 angeordnet ist, und einen Raststeg 11 auf, der in Figur 2 aus der linken Oberfläche der Kugelhaube 4 hervorsteht.

Der Raststeg 11 erstreckt sich etwa mittig in Figur 1 horizontal wenigstens entlang des linken Teils der Oberfläche der Kugelhaube 4 über einen solchen Winkel, der dem möglichen Drehwinkel des Mischhebels 5 bei der Temperaturverstellung entspricht.

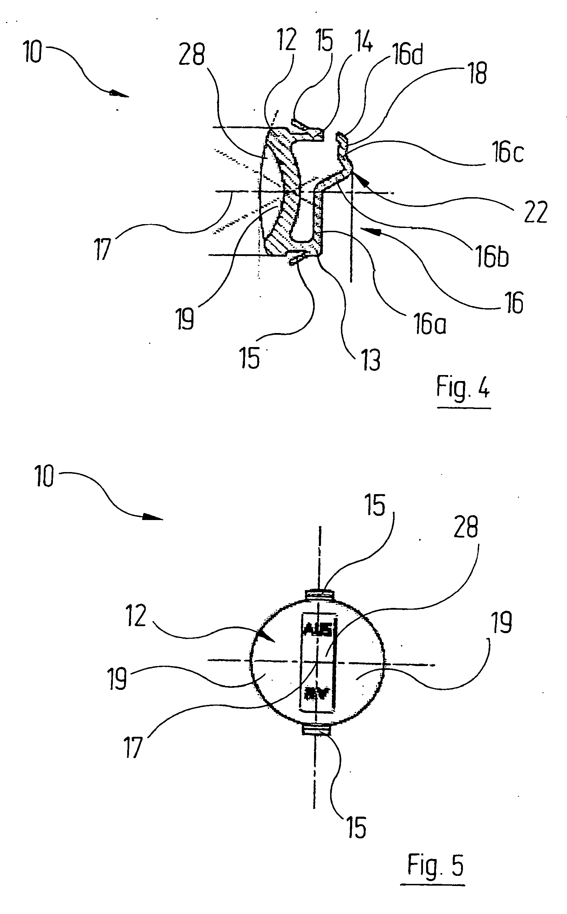

Das Drehbetätigungselement 10 ist vergrößert im Schnitt in Figur 4 und in der Draufsicht in Figur 5 dargestellt. Es weist einen in der Draufsicht in Figur 5 kreisförmigen Grundkörper 12 auf. An den Grundkörper 12 schließen sich in Figur 4 unten rechts und oben rechts waagerecht jeweils ein im Wesentlichen quaderförmiger Haltesteg 13 beziehungsweise 14 an. Mit den Haltestegen 13, 14 wird der Grundkörper 12 in dem Kappenabschnitt 7 gehalten (Figuren 2, 3) .

Die Haltestege 13, 14 weisen jeweils auf ihrer dem jeweils anderen Haltesteg abgewandten Seite einen federnden Flügel 15 auf. Die Flügel 15 gehen von den Haltestegen 13, 14 einstückig unter einem Winkel von etwa 30° in Figur 4 nach links ab.

Der in Figur 4 untere Haltesteg 13 geht an seiner rechten Stirnseite in ein federndes, an einem Ende freies, Rastelement 16 über.

Ein erster Bereich 16a des Rastelements 16 verläuft senkrecht zum Haltesteg 13. Er erstreckt sich in Figur 4 etwa bis zu einer virtuellen Drehachse 17 des Drehbetätigungselements 10, die durch den Mittelpunkt des kreisförmigen Grundkörpers 12 führt. Dort weist das Rastelement 16 einen Rechtsknick um etwa 30° auf, dem sich ein Vorsprung 22 anschließt, der drei weitere Bereiche 16b, 16c und 16d umfasst.

Auf den Rechtsknick folgt der zweite, ebenfalls gerade Bereich 16b, dessen Länge etwa dem halben Radius des Grundkörpers 12 entspricht.

An den zweiten Bereich 16b schließt sich nach einem Linksknick um einen stumpfen Winkel der dritte Bereich 16c an.

Der dritte Bereich 16c ist gerade so lang, dass er in Figur 4 etwa auf der Höhe des oberen Haltesteges 14 endet. Er weist etwa mittig eine in Figur 4 von rechts betrachtet konkave Mulde auf, die die Funktion einer Rastnut 18 hat. Sie wirkt zusammen mit dem Raststeg 11 der Kugelhaube 4.

Das freie Ende 16d des dritten Bereichs 16c ist in Figur 4 nach links gebogen, so dass das Rastelement 16 dort mit einer Rundung abschließt.

Der Grundkörper 12 hat in etwa die Form einer konvexen Linse.

In seiner in Figur 4 linken Oberfläche ist eine vertikale Nut 28 eingebracht. In die Nut 28 kann beispielsweise mit einer Münze eingegriffen werden, um das Drehbetätigungselement 10 um seine Drehachse 17 zu drehen.

In der Draufsicht in Figur 5 ist der Grund der Nut 28 oben mit dem Wort "Aus" und unten mit dem auf dem Kopf stehenden Wort "An" beschriftet, um den Benutzer hier über den Aktivierungszustand des Wasserdurchflussbegrenzers 9 zu informieren (im dargestellten Fall "Aus ").

Im Mantel des Kappenabschnittes 7 in den Figuren 1, 2, 3 links ist eine kreiszylinderförmige öffnung 20 für das Drehbetätigungselement 10 angeordnet. Entlang der Innenmantelfläche der Öffnung 20 erstreckt sich eine umlaufende Nut 21, die als Führung und Rastung für die Flügel 15 des Drehbetätigungselements 10 dient.

Um den Wasserdurchflussbegrenzer 9 zu aktivieren, wird das Drehbetätigungselement 10 so gedreht, dass der Vorsprung 22 mit der Rastnut 18 unterhalb der virtuellen Drehachse 17 angeordnet ist (Figur 2).

Wird der Mischhebel 5 in Figur 1 nach oben geschwenkt um den Wasserdurchfluss zu vergrößern, so wird der Vorsprung 22 des Rastelementes 16 in einem Abstand entlang der Oberfläche der Kugelhaube 4 nach rechts oben geführt, bis er an den Raststeg 11 anstößt. Durch den mechanischen Widerstand am Mischhebel 5 wird der Benutzer darüber informiert, dass beim Weiterschwenken des Mischhebels 5 der Bereich eines geringen Nasserflusses verlassen wird.

Der Mischhebel 5 kann gegen den mechanischen Widerstand des federnden Rastelements 16 weiter nach oben geschwenkt werden, bis der Raststeg 11 in einer zweiten Stufe in die Rastnut 18 einrastet. Das Rastelement 16 bildet somit mit dem Raststeg 11 eine Rasteinrichtung.

Um einen großen Wasserfluss einzustellen, wird der Mischhebel 5 gegen den mechanischen Widerstand weiter nach rechts oben geschwenkt, wodurch die Rastnut 18 über den Raststeg 11 hinweggeschcben wird.

Das abgerundete freie Ende des Rastelements 16 erleichtert dessen Führung über den Raststeg 11, wenn der Mischhebel 5 zum Verringern des Wasserdurchflusses in Figur 1 wieder nach unten geschwenkt wird.

Um den Wasserdurchflussbegrenzer 9 zu deaktivieren, wird das Drehbetätigungselement 10 so gedreht, dass der Vorsprung 22 in Figur 3 oberhalb der virtuellen Drehachse 17 angeordnet ist. Beim Schwenken des Mischhebels 5 berührt dann der Vorsprung 22 den Raststeg 11 nicht.

Insgesamt ist der Wasserdurchflussbegrenzer 9 so dimensioniert und positioniert, dass in aktiviertem zustand das Rastelement 16 so weit in Richtung der Oberfläche der Kugelhaube 4 ragt, dass es beim Schwenken des Mischhebels 5 sowohl in Aufwärts- als auch Abwärts-Richtung gegen den Raststeg 11 stößt. In allen anderen Schwenk-Positionen des Mischhebels 5 hält das Rastelement 16 immer einen kleinen Abstand zur Oberfläche der Kugelhaube 4 ein.

In deaktiviertem Zustand des Wasserdurchflussbegrenzers 9 hält das Rastelement 16 immer einen etwas größeren Abstand zur Oberfläche der Kugelhaube 4, insbesondere zum Raststeg 11, ein.

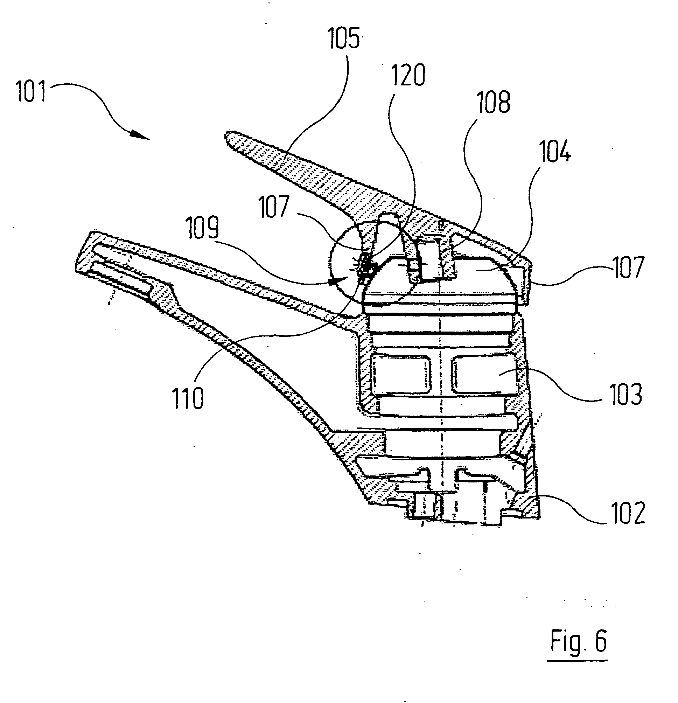

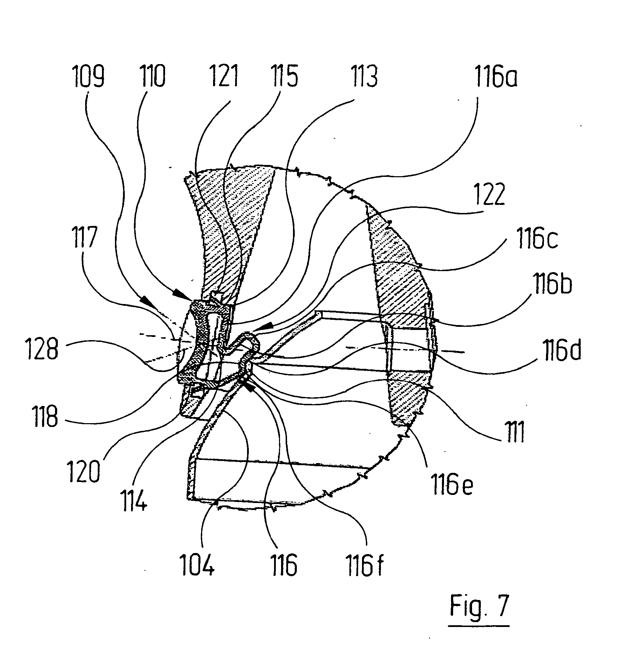

In den Figuren 6 und 7 ist ein zweites Ausführungsbeispiel einer Einhebelmischbatterie 101 mit einem aktivierten Wasserdurchflussbegrenzer 109 dargestellt. Diejenigen Elemente, die zu denen des ersten, anhand der Figuren 1 bis 3 beschriebenen Ausführungsbeispiels ähnlich sind, sind mit den selben Bezugszeichen zuzüglich 100 versehen, so dass bezüglich deren Beschreibung auf die Ausführungen zum ersten Ausführungsbeispiel Bezug genommen wird. Dieses Ausführungsbeispiel unterscheidet sich von dem ersten dadurch, dass ein insgesamt federndes Rastelement 116 mit beiden Enden an einem Haltesteg 113, 114 befestigt, also geschlossen, ist.

Ausgehend von seinem in Figur 7 oberen Ende, welches sich an die rechte Stirnseite des Haltesteges 113 anschließt, erstreckt sich ein erster Bereich 116a des Rastelements 116 im Wesentlichen senkrecht zum Haltesteg 113 nach unten.

Im Bereich einer virtuellen Drehachse 117 des Drehbetätigungselements 110 ist das Rastelement 116 um einen Winkel von etwa 135° in Figur 7 nach rechts oben gebogen, so dass sich dem ersten Bereich 116a ein Vorsprung 122 anschließt, der fünf weitere Bereiche 116b, 116c,116d, 116e und 116f umfasst. Durch diese starke Biegung entsteht ein Oberhang, der die federnde Eigenschaft des Rastelements 116 verbessert.

Hinter der Biegung verläuft das Rastelement 116 in dem zweiten Bereich 116b gerade nach schräg rechts oben.

Etwa mittig zwischen der virtuellen Drehachse 117 und dem in Figur 7 oberen Rand des Drehbetätigungselements 110 ist das Rastelement 116 ein weiteres Mal um etwa 90° nach rechts gebogen.

Der nachfolgende dritte ebenfalls gerade Bereich 116c ist etwa halb so lang wie der zweite, gerade, Bereich 116b. Am Ende des dritten, geraden, Bereichs 116c ist eine weitere 90° Biegung nach rechts vorgesehen. An diese schließt sich der vierte, ebenfalls gerade Bereich 116d an, dessen Länge etwa der Länge des ersten, geraden, Bereichs 116b entspricht.

Der vierte, gerade, Bereich 116d geht in einen S-förmigen Bereich 116e über, der mit einer Linkskurve beginnt, die eine Rastnut 118 bildet.

Der S-förmigen Bereich 116e geht in den fünften, geraden, Bereich 116f über, dessen Ende mit dem unteren Haltesteg 114 verbunden ist, so dass das Rastelement 116 insgesamt geschlossen ist.

Der Wasserdurchflussbegrenzer 109 ist aktiviert, wenn das Drehbetatigungselement 110 so gedreht ist, dass sich die Rastnut 118 in Figur 7 unterhalb der virtuellen Drehachse 117 befindet.

Ist die Rastnut 118 oberhalb der virtuellen Drehachse 117 angeordnet, was nicht dargestellt ist, so ist der Wasserdurchflussbegrenzer aktiviert.

Der Wasserdurchflussbegrenzer 109 gemäß dem zweiten Ausführungsbeispiel funktioniert im Übrigen analog zu dem Wasserdurchflussbegrenzer 9 gemäß dem ersten Ausführungsbeispiel.

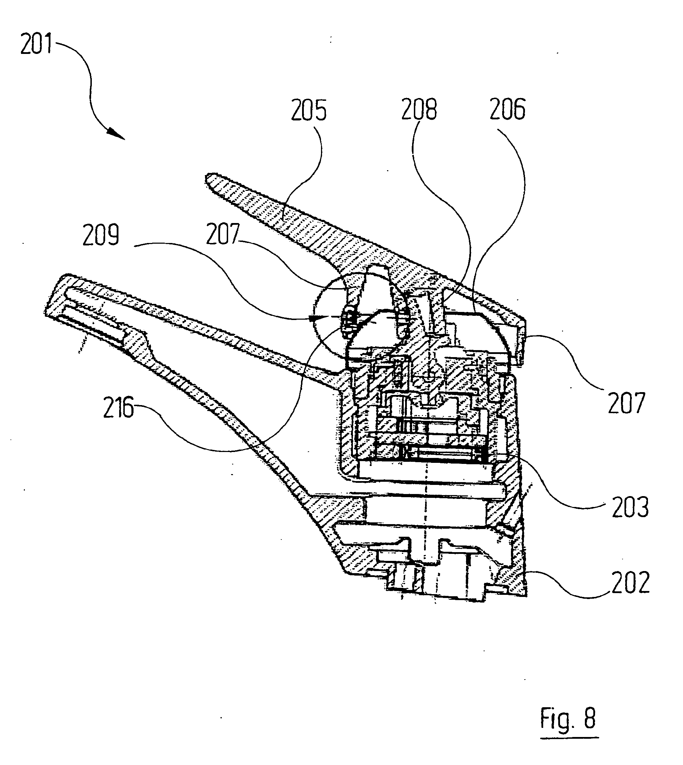

In den Figuren 8, 9, 10 ist ein drittes Ausführungsbeispiel einer Einhebelmischbatterie 210 dargestellt. Diejenigen Elemente, die zu denen des ersten anhand der Figuren 1, 2, 3 beschriebenen Ausführungsbeispiels ähnlich sind, sind mit den selben Bezugszeichen zuzüglich 200 versehen, so dass bezüglich deren Beschreibung auf die Ausführungen zum ersten Ausführungsbeispiel Bezug genommen wird.

Dieses Ausführungsbeispiel unterscheidet sich von dem ersten dadurch, dass ein Wasserdurchflussbegrenzer 209 ein als getrennter Teil ausgebildetes Rastelement 216 aufweist, welches ein vorgespanntes Winkelelement 260 umfasst.

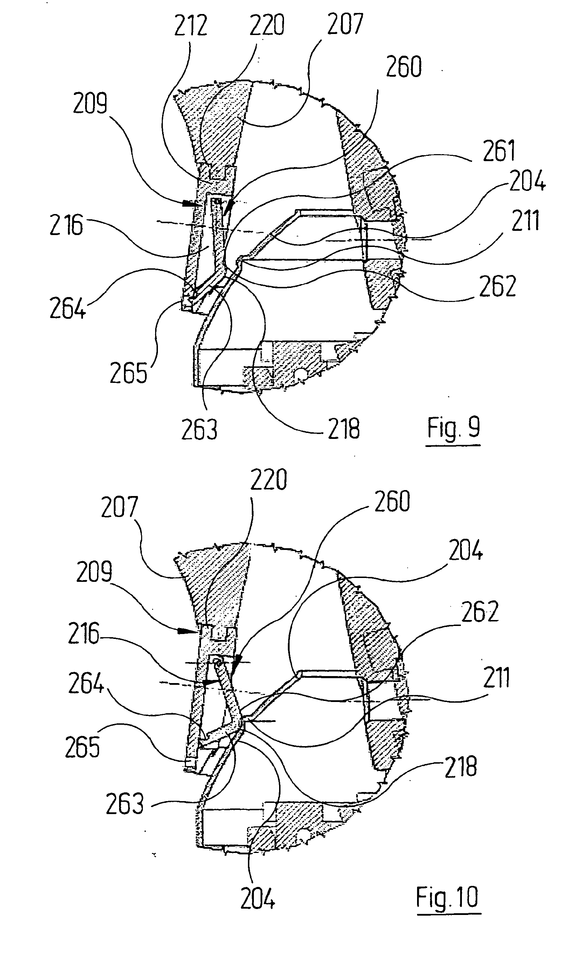

Das Winkelelement 260 ist mit seinem in Figuren 9, 10 oberen Ende um seine senkrecht zur Zeichenebene verlaufende Achse schwenkbar in einem Grundkörper 212 des Wasserdurchflussbegrenzers 209 befestigt. Der Grundkörper 212 ist in einer Öffnung 220 in einem Kappenabschnitt 207 fest angeordnet.

Das Winkelelement 260 hat über seine gesamte Länge einen konstanten Querschnitt. Im Anschluss an einen in Figuren 9, 10 oberen geraden Bereich 261, der etwa zwei Drittel der Länge des Winkelelements 260 ausmacht, befindet sich ein Knick 262 der in entspanntem Zustand des Winkelelementes 260 (Figur 10) um etwa 90° verläuft und auf seiner in den Figuren 9, 10 rechten Oberfläche eine Rastnut 218 aufweist.

Im Anschluss an den Knick 262 ist ein in Figuren 9, 10 unterer gerader Bereich 263 angeordnet.

Auf der linken Seite des unteren Endes des unteren Bereichs 263 befindet sich eine Einbuchtung 264, die ähnlich einem Haken im in Figur 9 dargestellten deaktivierten Zustand des Wasserdurchflussbegrenzers 209 das Winkelelement 260 in einem durchgängigen Fixierloch 265 im unteren Bereich des Grundkörpers 212 unter Spannung festhält. Hierdurch wird das Winkelelement 260 gegen seine Vorspannung gestreckt, zu dass sein der Oberfläche der Kugelhaube 204 am nächsten gelegener Bereich, nämlich der Knick 262, immer einen Abstand zur Oberfläche der Kugelhaube 204, insbesondere zu einem Raststeg 211, einhält.

Um den Wasserdurchflussbegrenzer 209 zu aktivieren, wird mit einem spitzen Gegenstand, beispielsweise einem Schraubenzieher, der Haken 264 aus dem Fixierloch 265 in Figur 9 nach rechts heraus geschoben. Durch die Vorspannung des Winkelelements 260 biegt sich nun der untere Bereich 263 in seine eigentliche Ausgangsstellung zurück nach oben. Da das Winkelelement 260 oben schwenkbar gelagert ist, wird der Knick 262 hierbei nach rechts geschoben (Figur 10).

Sobald beim Vergrößern des Wasserdurchflusses der Mischhebel 205 in Figur 8 so weit nach oben geschwenkt wird, dass der Knick 262 den Raststeg 211 erreicht, rastet der Raststeg 211 unter Überwindung eines mechanischen Widerstandes in die Rastnut 218 ein.

Durch den mechanischen Widerstand wird dem Benutzer signalisiert, dass der Wasserdurchfluss einen normalen Anforderungen entsprechenden Wert erreicht hat. Um den Wasserdurchfluss weiter zu vergrößern, muss der mechanische Widerstand überwunden werden, um die Rastnut 218 über den Raststeg 211 hinweg zu schieben.

Der Wasserdurchflussbegrenzer 209 gemäß dem dritten Ausführungsbeispiel ist werksseitig wie in Figur 9 dargestellt deaktiviert. Sobald er aktiviert ist, kann er nicht wieder deaktiviert werden, ohne dass zumindest der Mischhebel 205 von der Einhebelmischbatterie 201 getrennt wird.

Er ist also beispielsweise bei einer Erstmontage der Einhebelmischbatterie 201 nur einmalig aktivierbar.

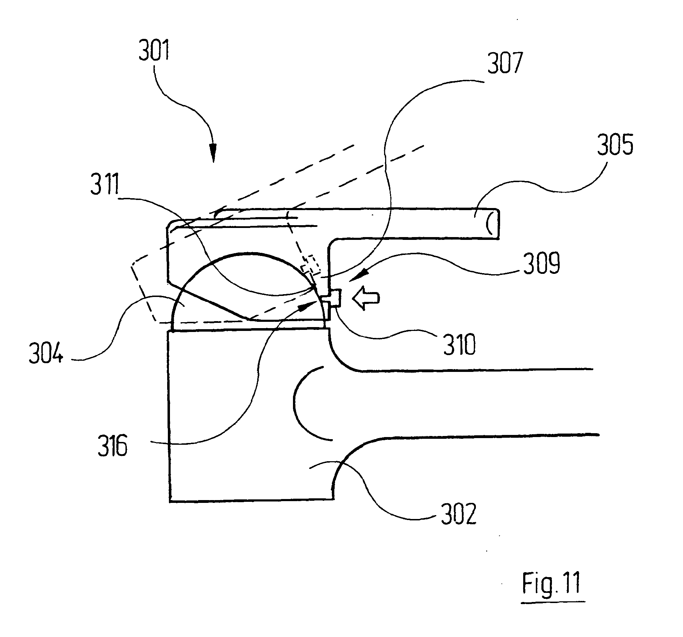

In Figur 11 ist ein viertes Ausführungsbeispiel einer Einhebelmischbatterie 301 mit einem Wasserdurchflussbegrenzer 309 dargestellt. Diejenigen Elemente, die zu denen des ersten anhand der Figuren 1, 2, 3 beschriebenen Ausführungsbeispiel ähnlich sind, sind mit den selben Bezugszeichen zuzüglich 300 versehen, so dass bezüglich deren Beschreibung auf die Ausführungen zum ersten Ausführungsbeispiel Bezug genommen wird.

Im Unterschied zum ersten Ausführungsbeispiel weist der Wasserdurchflussbegrenzer 309 im vierten Ausführungsbeispiel statt eines Drehbetätigungselements 10 ein Druckbetätigungselement 310 in einem Kappenabschnitt 307 auf.

An das Druckbetätigungselement 310 schließt sich in Figur 11 ein insgesamt federnder Rastnippel 316 an.

Um den Wasserdurchflussbegrenzer 19 zu aktivieren, wird das Betätigungselement 310 in Figur 11 nach links in Richtung der Kugelhaube 304 geschoben. Sobald beim Hochschwenken des Mischhebels 305 zum Vergrößern des Wasserdurchflusses der Rastnippel 316 mit seinem freien Ende einen Raststeg 311 in der Oberfläche der Kugelhaube 304 erreicht, stößt er an diesen an. Hierdurch wird ein mechanischer Widerstand erzeugt, der am Mischhebel 305 spürbar ist.

Um den Wasserfluss weiter zu vergrößern, muss der mechanischen Widerstand, der durch den federnden Rastnippel 316 hervorgerufen wird, überwunden werden (in Figur 11 gestrichelt dargestellt).

Der Wasserdurchflussbegrenzer 309 wird deaktiviert, indem das Druckbetätigungselement 310 Figur 11 nach rechts von der Kugelhaube 304 weg bewegt wird, so dass der Rastnippel 316 in allen Schwenkpositionen des Mischhebels 305 einen Abstand zu dem Raststeg 311 einhält.

Zusätzlich kann bei allen Ausführungsbeispielen auch vorgesehen sein, dass ein akustisches Signal ausgegeben wird, sobald das Rastelement den Raststeg überfährt. Das Signal kann auf mechanischem oder elektronischem Wege erzeugt werden.

Statt oder zusätzlich zu dem akustischen Signal, kann ein optisches Signal vorgesehen sein. Beispielsweise kann ein Leuchtmittel, insbesondere eine Leuchtdiode, vorgesehen sein, das zum Strahlen angesteuert wird, sobald das Rastelement den Raststeg beim Vergrößern des Wasserdurchflusses erreicht. Auf diese Weise wird dem Benutzer signalisiert, dass ein Wasserdurchfluss herrscht, der größer ist als der durch den Wasserdurchflussbegrenzer begrenzte Normalwert.

Statt des Leuchtmittels kann auch ein beispielsweise farbiger Ring oder dergleichen sichtbar werden, sobald der Widerstand des Wasserdurchflussbegrenzers überwunden wird und ein großer Wasserdurchfluss herrscht.

Es kann auch ein Schauglas vorgesehen sein, hinter dem sich eine Flüssigkeit mit einer Luftblase befindet. Je nach Position des Mischhebels befindet sich die Luftblase in einem mit dem Wort "Sparen" bezeichneten Bereich oder einem mit "Viel Wasser" bezeichneten Bereich des Schauglases.

Statt der Luftblase kann hinter dem Schauglas eine Kugel angeordnet sein, die mit den Ziffern 1 und 2 bedruckt ist. Die Kugel kann einen exzentrischen Schwerpunkt haben, so dass je nach Stellung des Mischhebels die entsprechende Ziffer im Schauglas angezeigt wird.

## Patentansprüche

1. Sanitärarmatur, insbesondere Einhebelmischbatterie (1; 101; 201; 301), mit einem Bedienungselement (5; 105; 205; 305), mit dem ein Wasserdurchfluss einstellbar ist, und einem Wasserdurchflussbegrenzer (9; 109; 209; 309), welcher den Wasserdurchfluss auf einen unter dem Maximalwert liegenden Wert begrenzt, wobei der Wasserdurchflussbegrenzer (9; 109; 209; 309) ein Betätigungselement (10; 110; 264; 310) aufweist, mit dem er zu- und/oder abschaltbar ist, wobei
der Wasserdurchflussbegrenzer (9; 109; 209; 309) eine Rasteinrichtung umfaßt mit einem Raststeg (11; 111; 211; 311), der an einer einen Aufnahmeraum für eine Steuerkartusche (3; 103; 203; 303) abdeckenden Kugelhaube (4; 104; 204; 304) angeordnet ist, und mit einem mit dem Raststeg (11; 111; 211; 311) zusammenwirkenden Rastelement (16; 116; 216; 316), das im oder am Bedienungselement (5; 105; 205; 305) angeordnet ist, **dadurch gekennzeichnet, dass** wenn der Wasserdurchflussbegrenzer (9; 109; 209; 309) zugeschaltet ist,
das Rastelement (16; 116; 216; 316) zum Vergrößern des Wasserdurchflusses über den Maximalwert gegen einen mechanischen Widerstand über den Raststeg (11; 111; 211; 311) hinweggeschoben werden kann.

2. Sanitärarmatur nach Anspruch 1, **dadurch gekennzeichnet, dass** das Betätigungselement (10; 110; 264; 310) im oder am Bedienungselement (5; 105; 205; 305) von außen zugänglich angeordnet ist.

3. Sanitärarmatur nach Anspruch 1 oder 2, **dadurch gekennzeichnet, dass** das Betätigungselement (10; 110) des Wasserdurchflussbegrenzers (9; 109) mit dem Rastelement (16; 116) um eine virtuelle Drehachse (17; 117) drehbar ist.

4. Sanitärarmatur nach einem der vorigen Ansprüche, **dadurch gekennzeichnet, dass** das Betätigungselement ein Druckbetätigungselement (264; 310) und linear verschiebbar ist.

5. Sanitärarmatur nach einem der vorigen Ansprüche, **dadurch gekennzeichnet, dass** die Rasteinrichtung (16; 116; 216) zweistufig ist.

6. Sanitärarmatur nach einem der vorigen Ansprüche, **dadurch gekennzeichnet, dass** das Rastelement (16; 116; 216) eine mit dem Raststeg (11; 111; 211) zusammenwirkende Rastnut (18; 118; 218) aufweist.

7. Sanitärarmatur nach Anspruch 6 bei Rückbeziehung auf Anspruch 3, **dadurch gekennzeichnet, dass** das Rastelement (16; 116) im Wesentlichen seitlich von der virtuellen Drehachse (17; 117) einen Vorsprung (22; 122) aufweist, an dem die Rastnut (18; 118) ausgebildet ist.

8. Sanitärarmatur nach Anspruch 6, **dadurch gekennzeichnet, dass** das Rastelement (216) ein vorgespanntes Winkelelement (260) mit wenigstens einem Knick (262) umfasst und die Rastnut (218) im Bereich des Knicks (262) angeordnet ist.

9. Sanitärarmatur nach einem der vorigen Ansprüche, **dadurch gekennzeichnet, dass** wenigstens ein das Rastelement (16; 116; 216; 316) aufweisender Teil des Wasserdurchflussbegrenzers (9; 109; 209; 309) elastisch ist.

10. Sanitärarmatur nach einem der vorigen Ansprüche, **dadurch gekennzeichnet, dass** der Wasserdurchflussbegrenzer einen optischen und/oder akustischen Signalgeber aufweist.

11. Sanitärarmatur nach einen der vorigen Ansprüche, **dadurch gekennzeichnet, dass** der Wasserdurchflussbegrenzer eine Funktionsanzeigeeinrichtung aufweist.

## Claims

1. Sanitary fitting, in particular single-lever mixing battery (1; 101; 201; 301), with an operating element (5; 105; 205; 305), by which a water flow is adjustable, and a water flow limiter (9; 109; 209; 309), which limits the water flow to a value lying below the maximum value, the water flow limiter (9; 109; 209; 309) having an actuating element (10; 110; 264; 310), by which it can be switched on and/or off,
the water flow limiter (9; 109; 209; 309) comprising a latching device with a latching ridge (11; 111; 211; 311), which is arranged on a spherical cap (4; 104; 204; 304) covering a receiving space for a control cartridge (3; 103; 203; 303), and with a latching element (16; 116; 216; 316), which cooperates with the latching ridge (11; 111; 211; 311) and is arranged in or on the operating element (5; 105; 205; 305),
**characterised in that**
when the water flow limiter (9; 109; 209; 309) is switched on, the latching element (16; 116; 216; 316) can be pushed over the latching ridge (11; 111; 211; 311) a-against a mechanical resistance in order to increase the water flow above the maximum value.

2. Sanitary fitting according to Claim 1, **characterised in that** the actuating element (10; 110; 264; 310) is arranged in or on the operating element (5; 105; 205; 305) in a manner accessible from outside.

3. Sanitary fitting according to Claim 1 or 2, **characterised in that** the actuating element (10; 110) of the water flow limiter (9; 109) is rotatable with the latching element (16; 116) about a virtual axis of rotation (17; 117).

4. Sanitary fitting according to one of the preceding claims, **characterised in that** the actuating element is a pressure actuating element (264; 310) and is linearly displaceable.

5. Sanitary fitting according to one of the preceding claims, **characterised in that** the latching device (16; 116; 216) has two stages.

6. Sanitary fitting according to one of the preceding claims, **characterised in that** the latching element (16; 116; 216) has a latching groove (18; 118; 218) cooperating with the latching ridge (11; 111; 211).

7. Sanitary fitting according to Claim 6 when referring back to Claim 3, **characterised in that** the latching element (16; 116) has a projection (22; 122) substantially to the side of the virtual axis of rotation (17; 117), on which projection the latching groove (18; 118) is formed.

8. Sanitary fitting according to Claim 6, **characterised in that** the latching element (216) comprises a prestressed angle element (260) with at least one bend (262) and the latching groove (218) is arranged in the region of the bend (262).

9. Sanitary fitting according to one of the preceding claims, **characterised in that** at least a part of the water flow limiter (9; 109; 209; 309) having the latching element (16; 116; 216; 316) is elastic.

10. Sanitary fitting according to one of the preceding claims, **characterised in that** the water flow limiter has a visual and/or an acoustic signal transmitter.

11. Sanitary fitting according to one of the preceding claims, **characterised in that** the water flow limiter has an operational indicating device.

## Revendications

1. Robinetterie sanitaire, en particulier mitigeur à levier unique (1 ; 101 ; 201 ; 301), avec un élément de manoeuvre (5 ; 105 ; 205 ; 305) qui permet de régler un débit d'eau, et avec un limiteur de débit d'eau (9 ; 109 ; 209 ; 309) qui limite le débit d'eau à une valeur inférieure à la valeur maximale, le limiteur de débit d'eau (9 ; 109 ; 209 ; 309) présentant un élément d'actionnement (10 ; 110 ; 264 ; 310) qui permet de l'activer et/ou de le désactiver,
sachant que le limiteur de débit d'eau (9 ; 109 ; 209 ; 309) comprend un dispositif de crantage, avec une nervure de crantage (11 ; 111 ; 211 ; 311) qui est disposée sur un capot sphérique (4 ; 104 ; 204 ; 304) recouvrant une chambre réceptrice pour une cartouche de commande (3 ; 103 ; 203 ; 303), et avec un élément de crantage (16 ; 116 ; 216 ; 316) qui coopère avec la nervure de crantage (11 ; 111 ; 211 ; 311) et qui est disposé dans ou sur l'élément de manoeuvre (5 ; 105 ; 205 ; 305),
**caractérisée en ce que,** lorsque le limiteur de débit d'eau (9 ; 109 ; 209 ; 309) est activé, l'élément de crantage (16 ; 116 ; 216 ; 316) peut, à l'encontre d'une résistance mécanique, être déplacé au-delà de la nervure de crantage (11 ; 111 ; 211 ; 311) afin d'augmenter le débit d'eau au-dessus de la valeur maximale.

2. Robinetterie sanitaire selon la revendication 1, **caractérisée en ce que** l'élément d'actionnement (10 ; 110 ; 264 ; 310) est disposé dans ou sur l'élément de manoeuvre (5 ; 105 ; 205 ; 305) en étant accessible de l'extérieur.

3. Robinetterie sanitaire selon la revendication 1 ou 2, **caractérisée en ce que** l'élément d'actionnement (10 ; 110) du limiteur de débit d'eau (9 ; 109) est rotatif avec l'élément de crantage (16 ; 116) autour d'un axe de rotation virtuel (17 ; 117).

4. Robinetterie sanitaire selon l'une des revendications précédentes, **caractérisée en ce que** l'élément d'actionnement est un élément d'actionnement par pression (264 ; 310) et peut être déplacé linéairement.

5. Robinetterie sanitaire selon l'une des revendications précédentes, **caractérisée en ce que** le dispositif de crantage (16 ; 116 ; 216) est à deux paliers.

6. Robinetterie sanitaire selon l'une des revendications précédentes, **caractérisée en ce que** l'élément de crantage (16 ; 116 ; 216) présente une rainure de crantage (18 ; 118 ; 218) coopérant avec la nervure de crantage (11 ; 111 ; 211).

7. Robinetterie sanitaire selon la revendication 6 en rattachement à la revendication 3, **caractérisée en ce que** l'élément de crantage (16 ; 116) présente, essentiellement sur le côté de l'axe de rotation virtuel (17 ; 117), une saillie (22 ; 122) sur laquelle est configurée la rainure de crantage (18 ; 118).

8. Robinetterie sanitaire selon la revendication 6, **caractérisée en ce que** l'élément de crantage (216) comprend un élément angulaire précontraint (260) ayant au moins un point d'inflexion (262), et la rainure de crantage (218) est disposée dans la région du point d'inflexion (262).

9. Robinetterie sanitaire selon l'une des revendications précédentes, **caractérisée en ce qu'**au moins une partie du limiteur de débit d'eau (9 ; 109 ; 209 ; 309) présentant l'élément de crantage (16 ; 116 ; 216 ; 316) est élastique.

10. Robinetterie sanitaire selon l'une des revendications précédentes, **caractérisée en ce** le limiteur de débit d'eau présente un transmetteur de signaux optiques et/ou acoustiques.

11. Robinetterie sanitaire selon l'une des revendications précédentes, **caractérisée en ce que** le limiteur de débit d'eau présente un dispositif d'affichage de fonctionnement.
